# EUROPÄISCHE PATENTSCHRIFT

(11) **EP 2 088 067 B1**
(45) Veröffentlichungstag und Bekanntmachung des Hinweises auf die Patenterteilung: **09.01.2013**
(21) Anmeldenummer: 09001273.3
(22) Anmeldetag: 30.01.2009
(51) Int. Cl.: B62K 9/00, B62K 27/00, B62K 13/00, E04H 1/02, E01H 1/02

(54) **Kinderfahrzeug, insbesondere Tretfahrzeug**
Child vehicle, in particular pedal vehicle
Véhicule pour enfant, notamment trotteur

(30) Priorität: 07.02.2008 DE 102008007895
(43) Veröffentlichungstag der Anmeldung: 12.08.2009
(73) Patentinhaber: Franz Schneider GmbH & Co. KG, 96465 Neustadt b. Coburg (DE)
(72) Erfinder: Ewringmann, Ulrich, 82024 Taufkirchen (DE)
(74) Vertreter: Flosdorff, Jürgen

(56) Entgegenhaltungen:
- DE-C- 873 669
- DE-C- 874 261
- DE-U1- 8 102 981
- US-A- 4 917 648

## Beschreibung

Die Erfindung betrifft ein Kinderfahrzeug gemäß dem Oberbegriff des Patentanspruchs 1. Bei dem Kinderfahrzeug handelt es sich vorzugsweise um ein Tretfahrzeug, wobei die Erfindung aber auch auf motorgetriebene Kinderfahrzeuge anwendbar ist.

Spielfahrzeuge der betrachteten Art, bei denen ein Kind auf dem Tretfahrzeug oder motorgetriebenen Fahrzeug sitzt, haben einen erhöhten Spielwert, wenn sie mit Zubehör ausgerüstet sind, mit dem über das eigentliche Fahren mit dem Fahrzeug hinaus bestimmte Aufgaben oder "Arbeiten" auf spielerische Weise ausgeführt werden können. Ein Beispiel hierfür ist ein Kindertretfahrzeug mit einer an zwei Armen gehaltenen Ladeschaufel, die in einer abgesenkten Position beispielsweise mit Sand beladen werden kann, um anschließend nach oben verschwenkt und in der angehobenen Position verriegelt zu werden, so dass das Tretfahrzeug nun mit der Ladung zu seinem Bestimmungsort gefahren werden kann, wo mittels eines Kippmechanismus die Ladeschaufel verschwenkt und die Sandladung ausgeschüttet werden kann. Ein weiteres Beispiel ist ein Kindertretfahrzeug, das mit einem Schneeräumschild versehen ist, mit dem ein Kind u.a. den Gehweg vor einer Haustür oder eine Garagenzufahrt von Schnee räumen kann, wodurch das Fahren mit dem Tretfahrzeug im Schnee interessant ist.

Das Spielzeug-Straßenreinigungsgerät der DE 81 02 981 U1, die als nächstliegender Stand der Technik angesehen wird, enthält in Fahrtrichtung vor der Bürstenwalze zwei in Längsschlitzen des Gehäuses gelagerte Laufräder, die beim Fahren des Gerätes mit ihren am Umfang angeordneten Gummiringen in einem reibenden Kontakt mit Längsrillen an äußeren Wellenabschnitten der rotierbaren Bürste gelangen, wodurch die Bürstenwelle mitgenommen werden und somit die Bürste in Rotation versetzt wird. Diese Laufräder sind nicht um vertikale Achsen schwenkbar gelagert, so dass sie beim Kurvenfahren über den Boden rutschen können und die Bürstenwalze dann nicht mehr antreiben.

Bei einem Spielzeugkehrwagen gemäß der DE 873 669 treiben die beiden hinteren Laufräder eine Bürstenwalze über ein Getriebe an. Einen Bürstenantrieb über Laufräder von Spielzeug-Kehrwagen offenbaren auch die DE 874 261 B sowie die US 4 917 648 A.

Der vorliegenden Erfindung liegt die Aufgabe zugrunde, ein Kinderfahrzeug anzugeben, dessen Spielwert dadurch erhöht ist, dass es für neue Verwendungszwecke einsetzbar ist.

Diese Aufgabe wird erfindungsgemäß durch die Merkmale des Patentanspruchs 1 gelöst.

Vorteilhafte Ausgestaltungen sind in den Unteransprüchen gekennzeichnet.

Die Erfindung sieht vor, dass das Kinderfahrzeug mit einem Kehrgerät verbindbar ist, das mit wenigstens einer Bürstenwalze versehen ist, Das Kehrgerät ist dabei mit dem Kinderfahrzeug lösbar verbunden, so dass das Kehrgerät bei Bedarf leicht an dem Kinderfahrzeug anbringbar und wieder abnehmbar ist.

Durch die Anbringung des Kehrgerätes ist der Spielwert des Kinderfahrzeuges erheblich erhöht, da das Kind hiermit die Möglichkeit erhält, auf spielerische Weise eine interessante und dabei in vielen Fällen nützliche Aufgabe zu erfüllen. Beispielsweise kann das Kind mit seinem Fahrzeug in der Wohnung den Boden kehren oder außerhalb des Hauses z.B. den Gehweg vor der Haustür oder eine Garagenzufahrt von loser Erde, Sand, Splitt oder dergleichen befreien.

Das Kehrgerät wird vorzugsweise vorne an dem Kinderfahrzeug befestigt, wozu das Kinderfahrzeug mit einem vorstehenden Kupplungsmaul versehen sein kann, in das das Kehrgerät mit einem entsprechend gestalteten Ansatz eingreift, wobei dieser Eingriff beispielsweise durch einen von oben nach unten durchgesteckten Bolzen aufrecht erhalten wird. Dabei liegt es im Rahmen der Erfindung, dass das Kehrgerät statt dessen hinten an dem Kinderfahrzeug anbringbar ist.
Mit Vorteil ist vorgesehen, dass das Kehrgerät so an dem Kinderfahrzeug befestigt wird, dass es in der horizontalen Ebene nicht-schwenkbar gegenüber dem Kinderfahrzeug ist. D.h. das Kinderfahrzeug und das Kehrgerät bilden eine lang gestreckte, starre Einheit, so dass beim Kurvenfahren das Kehrgerät gemeinsam mit dem Kinderfahrzeug die gekrümmte Bahn durchfährt.

Mit besonderem Vorteil wird vorgeschlagen, dass das Kehrgerät über einen Adapter mit dem Kinderfahrzeug verbindbar ist, wobei der Adapter bevorzugt an dem oben erwähnten Kupplungsmaul des Kinderfahrzeugs befestigt ist. Auch hierbei ist die lösbare Anbringung bevorzugt vorne an dem Kinderfahrzeug vorgesehen, ohne dass die Erfindung hierauf beschränkt ist.

Der Adapter dient dazu, dass das Kehrgerät aus der funktionsfähigen Lage, in der es mit seinen Rollen oder Rädern auf dem Boden aufliegt, anhebbar ist, wobei hierbei das gesamte Kehrgerät schräg nach oben angehoben wird. Der Adapter hat dabei Führungsbahnen, in die Zapfen eingreifen, die sich an einem Bügel befinden, der starr an dem Gehäuse des Kehrgerätes befestigt ist. Beim Anheben des Kehrgerätes werden die Zapfen des Bügels in den Führungsbahnen nach oben bewegt und in der oberen Endstellung verriegelt, in der das Kehrgerät vom Boden abgehoben ist.

Wie bereits oben erwähnt, enthält das Kehrgerät wenigstens eine Bürstenwalze, die um eine horizontale, in Querrichtung des Kehrgeräts verlaufende Achse gedreht wird. Dabei liegt es im Rahmen der Erfindung, dass beispielsweise auch zwei Bürsten vorgesehen sein können, die in Querrichtung nebeneinander liegend um vertikale Achsen gegenläufig rotieren.

Der Antriebsmechanismus enthält erfindungsgemäß ein Mitnehmerrad, das in der funktionsfähigen Lage des Kehrgerätes auf dem Boden aufliegt und damit bei der Fahrt des Kinderfahrzeugs gedreht wird. An dem Mitnehmerrad liegt in einer Ausführungsform ein weiteres Rad an, das vorzugsweise die Form eines Kugelabschnitts hat und mit seiner balligen Lauffläche stets an das Mitnehmerrad angedrückt ist. Dieses von dem Mitnehmerrad angetriebene Rad, das auch als Kugelrad bezeichnet werden kann, ist drehfest mit einer Antriebsachse für die Bürstenwalze verbunden. Die Antriebsachse und die Achse der Bürstenwalze sind antriebsmäßig z.B. über eine Gliederkette verbunden, die in Eingriff mit den beiden Zahnrädern der Antriebsachse und der Achse der Bürstenwalze steht. Es können auch andere Mittel eingesetzt werden, um die Drehung der Antriebsachse auf die Achse der Bürstenwalze zu übertragen, beispielsweise Zahnriemen, 0-Ringe oder ein Zahnradgetriebe.

Das Kugelrad hat vorzugsweise eine Lauffläche mit einem hohen Reibungskoeffizienten und besteht beispielsweise aus EVA. Das Kugelrad oder das Mitnehmerrad kann bzw. können eine Oberflächenstruktur aufweisen, die dazu beiträgt, dass die Drehung des Mitnehmerrades ohne Gleiten auf das Kugelrad übertragen wird.

Weiter ist erfindungsgemäß vorgesehen, dass das Mitnehmerrad um eine senkrechte Achse drehbar gelagert ist. Dabei befindet sich die senkrechte Achse mittig über der Antriebsachse, indem sie an dieser Stelle an der Gehäusewand befestigt ist. Diese Ausbildung hat zur Folge, dass bei Lenkbewegungen des Kinderfahrzeugs das Mitnehmerrad entsprechend einlenkt, wobei stets der Kontakt mit dem vorzugsweise angeordneten Kugelrad der Antriebsachse aufrecht erhalten wird. Hierdurch ist verhindert, dass beim Kurvenfahren des Fahrzeugs mit der Kehrmaschine das Mitnehmerrad nur über den Boden rutscht und die Bürstenwalze nicht mehr antreibt.

Das Kehrgerät enthält zudem vorzugsweise einen Auffangbehälter, der (bei der bevorzugten Anbringung des Kehrgerätes am vorderen Ende des Kinderfahrzeugs) am vorderen Endbereich des Gehäuses des Kehrgerätes lösbar befestigt ist. Die Bürstenwalze dreht sich am Boden in der Fahrrichtung des Kinderfahrzeugs und des Kehrgerätes und fördert so das Kehrgut nach vorne in den Auffangbehälter.

Am vorderen Endbereich des Gehäuses des Kehrgerätes sind nach einem weiteren Vorschlag der Erfindung zwei seitlich beabstandete Laufrollen befestigt, die um vertikale Achsen drehbar sind. Das Gehäuse des Kehrgerätes liegt damit auf diesen vorderen Lenkrollen und auf dem im hinteren Bereich des Kehrgerätes angeordneten Mitnehmerrad auf, wobei durch diese Drei-Punkt-Lagerung der Abstand der Bürstenwalze zum Boden in der funktionsfähigen Lage des Kehrgerätes stets konstant bleibt.

Das Gehäuse des Kehrgerätes und sein Auffangbehälter bestehen zweckmäßigerweise aus Kunststoff, was auch auf den bevorzugt vorgesehenen Adapter zutrifft.

Weitere Einzelheiten der Erfindung ergeben sich aus der nachfolgenden Beschreibung einer bevorzugten Ausführungsform des Kehrgerätes sowie anhand der Zeichnungen. Dabei zeigen:
- Figur 1: eine Seitenansicht einer Ausführungsform des Kehrgerätes mit einem Adapter;
- Figur 2: eine Vorderansicht des Kehrgerätes gemäß Figur 1;
- Figur 3: eine perspektivische Aufsicht auf das Kehrgerät gemäß Figur 1;
- Figur 4: einen Schnitt entlang der Linie A-A in Figur 2;

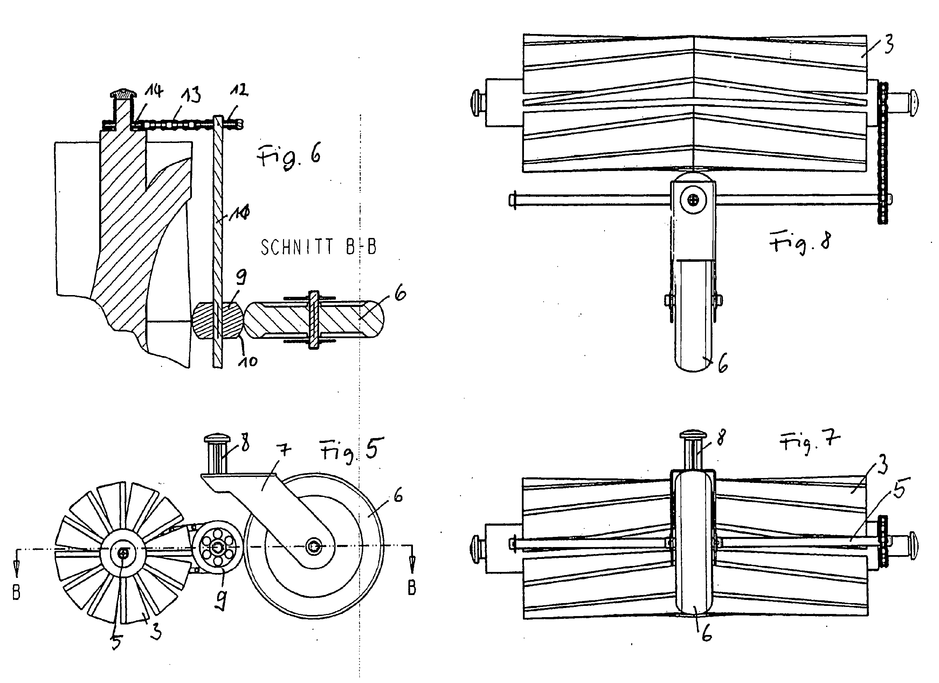

- Figur 5: eine Seitenansicht der Antriebsanordnung für die Bürstenwalze des Kehrgerätes;
- Figur 6: einen Schnitt entlang der Linie B-B in Figur 5;
- Figur 7: eine Vorderansicht auf die Anordnung gemäß Figur 5 von rechts;
- Figur 8: eine Aufsicht auf die Anordnung gemäß Figur 5;

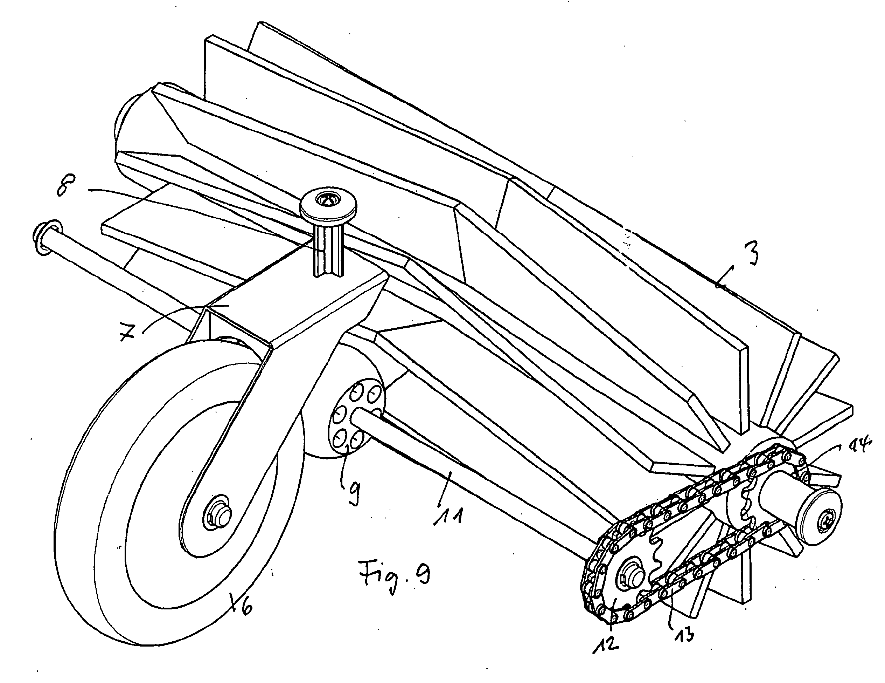

- Figur 9: eine perspektivische Ansicht der Anordnung gemäß Figur 5;

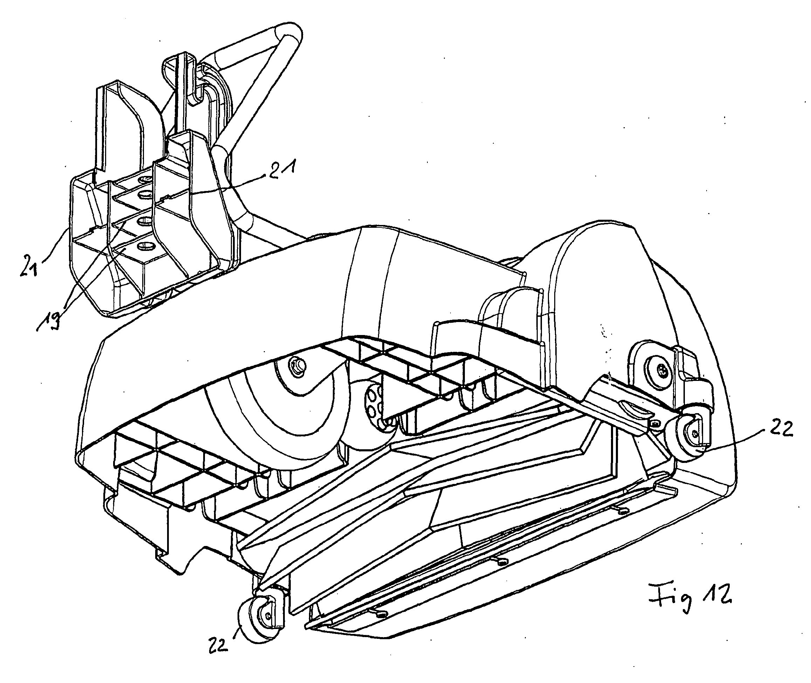

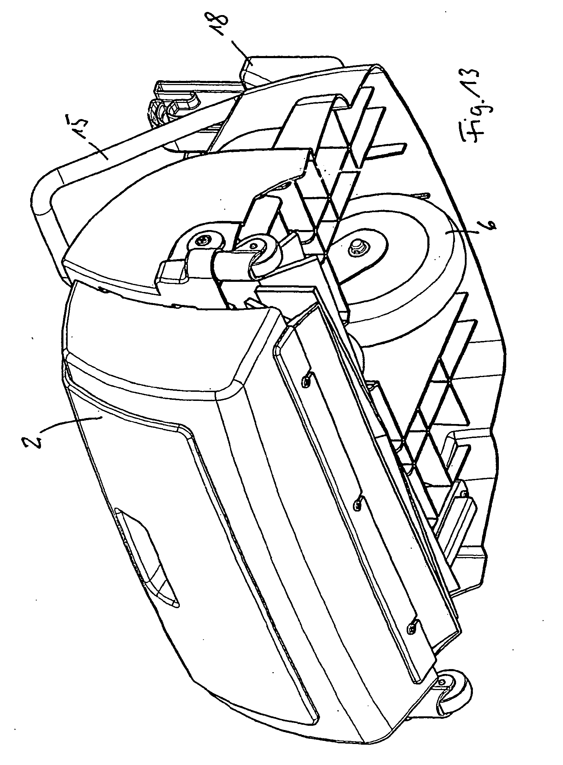

- Figur 10 bis 13: verschiedene perspektivische Ansichten des Kehrgeräts gemäß Figur 1 und

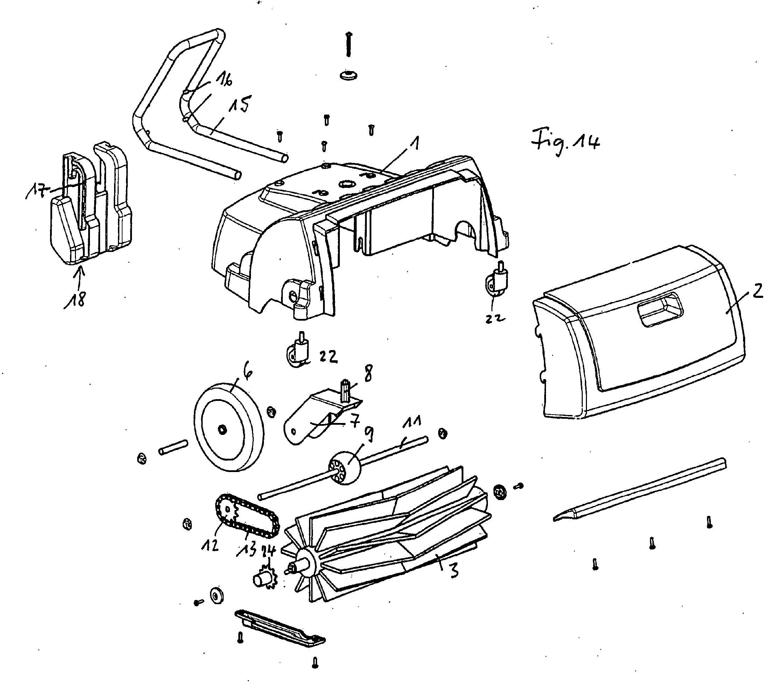

- Figur 14: eine Darstellung der einzelnen Bestandteile des Kehrgerätes gemäß Figur 1;
- Figuren 15 bis 20: einen alternativen Antrieb mittel Kette und Zahnrädern in verschiedenen Darstellungen.

Das Kehrgerät enthält ein Gehäuse 1, an dessen vorderen Endbereich ein Auffangbehälter 2 für Kehrgut lösbar befestigt ist. In dem Gehäuse 1 ist eine Bürstenwalze 3 angeordnet, die beim Vorwärtsfahren eines in den Figuren nicht dargestellten Kinderfahrzeugs Kehrgut in den Auffangbehälter 2 befördert. Die Bürstenwalze 3 dreht sich dabei am Boden in der Fahrtrichtung des Kinderfahrzeugs und fördert das Kehrgut nach vorne, wobei eine sich in Längsrichtung der Bürstenwalze 3 erstreckende, am Boden anliegende Lippe 4 den Eintritt des Kehrgutes in den Auffangbehälter 2 erleichtert.

Zum Antrieb der Bürstenwalze 3, die um ihre horizontale Achse 5 drehbar ist, ist in dem Gehäuse 1 ein Mitnehmerrad 6 angeordnet, das im funktionsfähigen Zustand des Kehrgerätes am Boden anliegt. Das Mitnehmerrad 6 ist über eine Halterung 7 mit einem Stift 8 verbunden, der eine vertikale Achse bildet, um die das Mitnehmerrad 6 schwenkbar ist. Der Stift 8 ist oben an dem Gehäuse 1 des Kehrgeräts befestigt.

An dem Mitnehmerrad 6 liegt ein weiteres Rad 9 ständig an, das eine im Querschnitt kreisbogenförmige Lauffläche 10 hat. Das Rad 9 ist drehfest mit einer Antriebsachse 11 verbunden, auf der das Rad 9 mittig sitzt.

An einem Endabschnitt der Antriebsachse 11 ist ein Zahnrad 12 drehfest mit der Antriebsachse verbunden, über das eine Gliederkette 13 läuft, die außerdem im Eingriff mit einem Zahnrad 14 der Achse 5 der Bürstenwalze 3 steht.

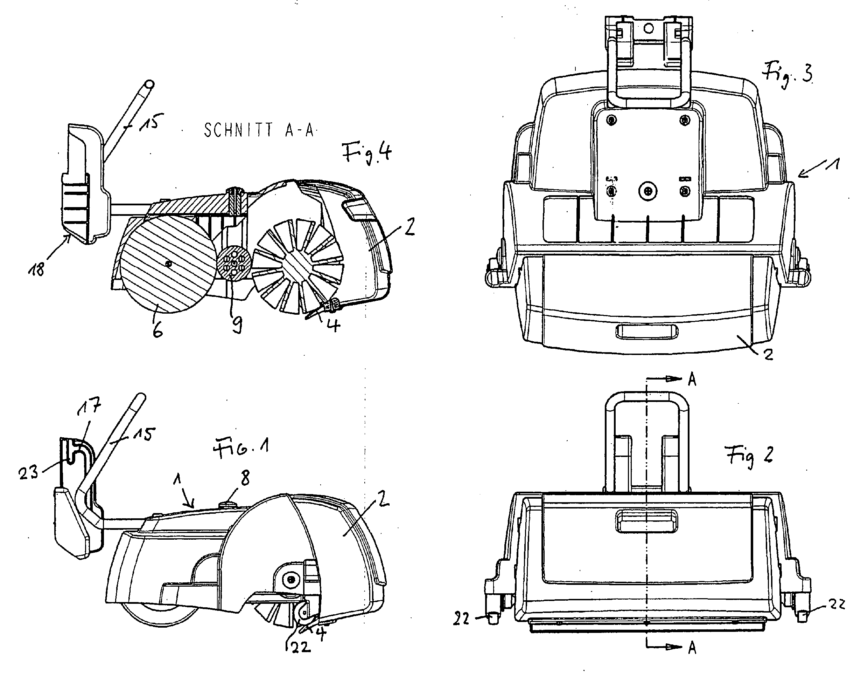

Beim Vorwärtsfahren des Kehrgerätes (nach rechts in der Darstellung der Figuren 1 und 4) wird stets das Mitnehmerrad 6 gedreht, wenn sich das Kehrgerät im funktionsfähigen Zustand befindet, in dem das Mitnehmerrad 6 auf dem Boden aufliegt. Beim Kurvenfahren wird das Mitnehmerrad 6 um die vertikale Achse 8 geschwenkt, die sich mittig über dem angetriebenen Rad 9 befindet. Das Rad 9 dreht über die Achse 11 das Zahnrad 12, wodurch die Bürstenwalze 3 in Drehung versetzt wird.

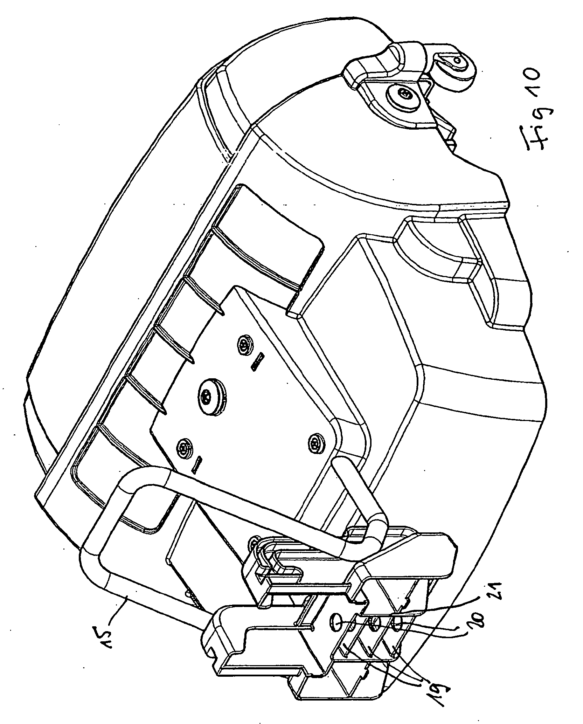

Oben an dem Gehäuse 1 ist ein Bügel 15 befestigt, der starr mit dem Gehäuse 1 verbunden ist. An den einander zugewandten Innenseiten der Holme des Bügels 15 befinden sich nach innen ragende Zapfen 16, die in Führungsbahnen 17 eines Adapters 18 eingreifen. Der Adapter 18 ist an einem in den Figuren nicht dargestellten vorderen Kupplungsmaul eines Kinderfahrzeugs befestigt, wobei das Kupplungsmaul zwischen horizontale Wände 19 (Figur 10) eingreift. Der Eingriff wird dadurch gesichert, dass ein (ebenfalls nicht dargestellter) Bolzen durch miteinander fluchtende Löcher 20 der Wände 19 und des Kupplungsmauls gesteckt wird.

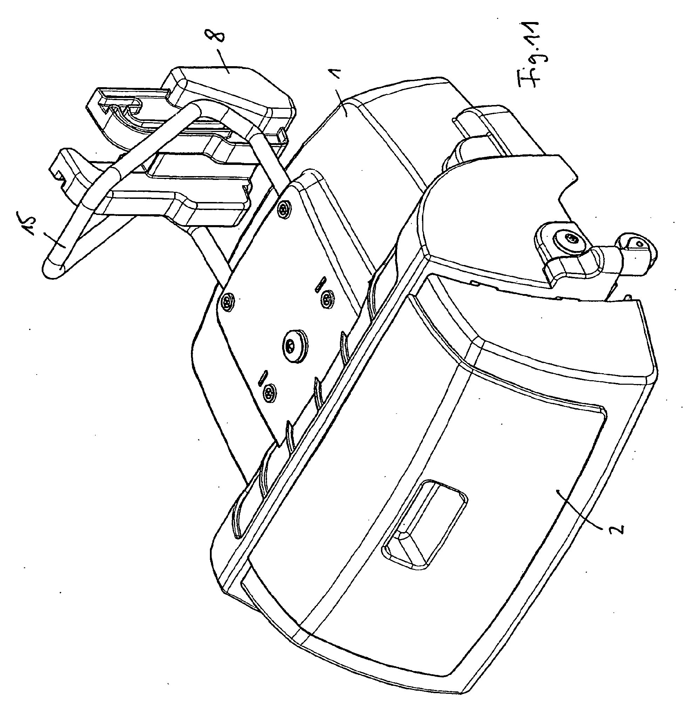

Der Adapter liegt mit seiner in Figur 11 sichtbaren Stirnkante 21 am vorderen Ende des Kinderfahrzeugs an, so dass das Kehrgerät in der horizontalen Ebene starr mit dem Kinderfahrzeug verbunden ist.

Das Kehrgerät ist aus seiner beispielsweise in Figur 1 dargestellten funktionsfähigen Lage, in der es mit dem Mitnehmerrad 6 und zwei am vorderen Ende des Gehäuses 1 angebrachten Lenkrollen 22 auf dem Boden aufliegt, in eine nicht-funktionsfähige Lage anhebbar, in dem der Bügel 15 als Handgriff benutzt und angehoben wird, wobei er mittels seiner Zapfen 16 in den Führungsbahnen 17 des Adapters 18 geführt wird. Das obere Zapfenpaar wird in einem Arretierabschnitt 23 der Führungsbahnen 17 fixiert. In diesem Zustand ist das gesamte Kehrgerät vom Boden abgehoben.

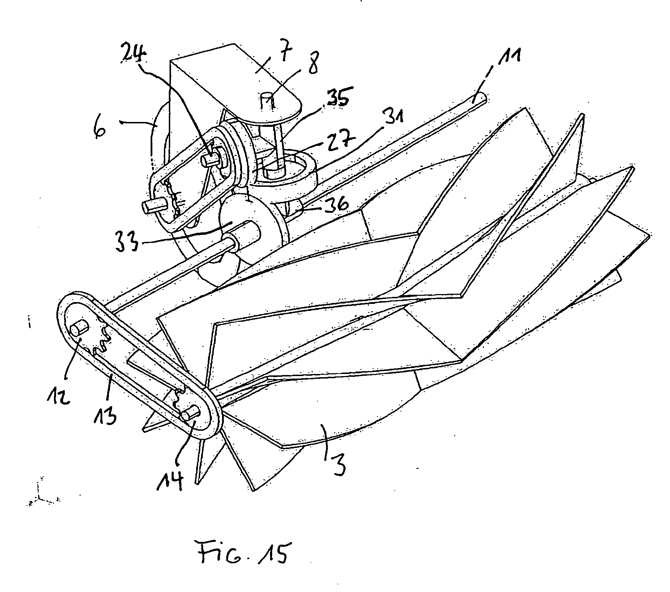

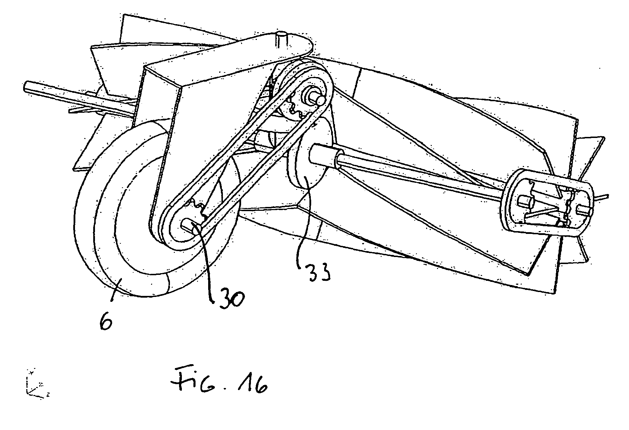

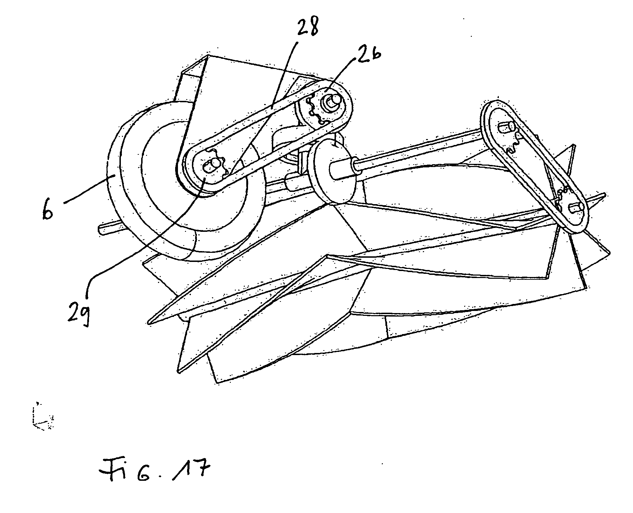

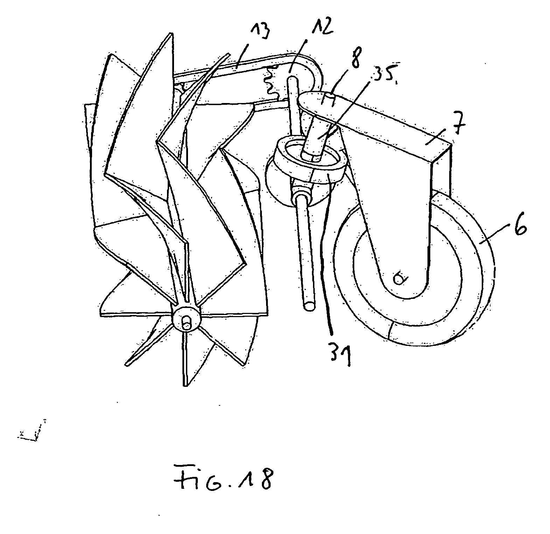

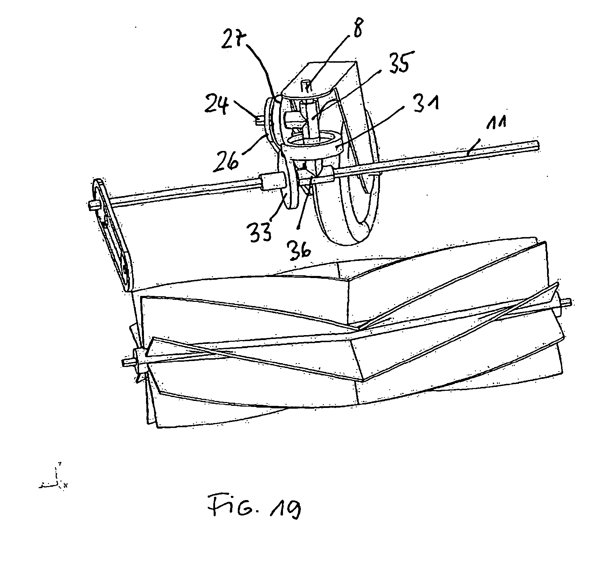

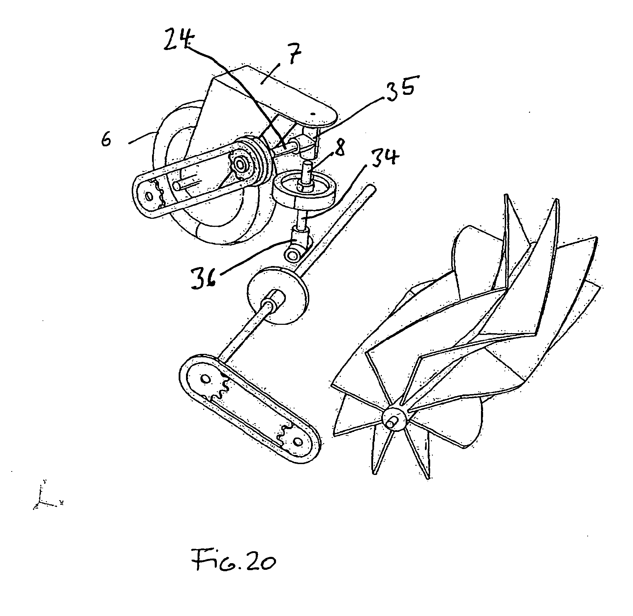

In den Figuren 15 bis 20 ist ein alternativer Antrieb für die Bürstenwalze des Kehrgerätes in verschiedenen Ansichten dargestellt. Das Mitnehmerrad 6 ist ebenso wie bei der vorigen Ausführungsform mittels einer Halterung 7 und einem oberen Vorsprung 8 drehbar am Gehäuse 1 befestigt. Der Vorsprung 8 ist der obere Endabschnitt einer Achse 34, die durch eine obere T-förmige Hülse 35 hindurchgesteckt ist und mit ihrem unteren Endabschnitt in einer unteren T-förmigen Hülse 36 sitzt, durch die die Welle 11 drehbar verläuft. In den horizontalem Teil der Hülse 35 ist ein Achsstück 24 eingesteckt, auf dem ein Zahnrad 26 drehbar sitzt, das drehfest mit einem daneben angeordneten Zahnrad 27 verbunden ist. Das Zahnrad 26 ist über eine Gliederkette 28 mit einem Zahnrad 29 verbunden, das drehfest auf einer von dem Mitnehmerrad 6 angetriebenen Welle 30 sitzt.

Das Zahnrad 27 steht im Eingriff mit einem rechtwinklig dazu angeordneten Zahnrad 31, das drehbar auf der Achse 34 sitzt und mit seiner unteren Verzahnung mit einem Zahnrad 33 kämmt, das drehfest mit der Achse 11 verbunden ist. Wie bei der obigen Ausführungsform wird die Drehung der Achse 11 über ein drehfest damit verbundenes Zahnrad 12 und eine Gliederkette 13 auf das Zahnrad 14 übertragen, mit der die Bürstenwalze 3 drehfest verbunden ist.

Beim Kurvenfahren wird - ebenso wie bei der oben beschriebenen Ausführungsform - das Mitnehmerrad 6 mit der Halterung 7 um die Achse 8 verschwenkt, wobei die Zahnräder 29, 26 und 27 mit der Gliederkette 28 dieser Schwenkbewegung folgen. Das Zahnrad 27 läuft auf dem Zahnrad 31 entsprechend ab. Wenn die Welle 30 des Mitnehmerrades 6 beim Ablaufen des Mitnehmerrades 6 am Boden gedreht wird, dreht das Zahnrad 29 über die Gliederkette 28 das Zahnrad 26 und damit das Zahnrad 27, das über das Zwischenrad 31 das Zahnrad 33 und damit das Zahnrad 12 dreht, das seinerseits über die Gliederkette 13 die Bürstenwalze 3 rotieren lässt.

Es wird betont, dass die Erfindung nicht auf die beschriebenen und dargestellten Ausführungsformen beschränkt ist. Vielmehr sind alle offenbarten Merkmale auf jede Weise einzeln miteinander kombinierbar.

## Patentansprüche

1. Kinderfahrzeug, insbesondere Tretfahrzeug, mit einem mit wenigstens einer um eine horizontale Achse rotierbaren Bürste versehenen Kehrgerät, das mit dem Kinderfahrzeug lösbar verbindbar ist,
**dadurch gekennzeichnet,**
**dass** zum Antrieb der Bürstenwalze ein Mitnehmerrad (6) angeordnet ist, das in der funktionsfähigen Lage des Kehrgerätes am Boden anliegt und mit einer Antriebsachse (11) antriebsmäßig gekoppelt ist, die ihrerseits mit der Achse (5) der Bürstenwalze (3) antriebsmäßig gekoppelt ist, und dass das Mitnehmerrad (6) um eine senkrechte Achse (8) drehbar gelagert ist, die mittig über der Antriebsachse (11) angeordnet ist.

2. Kinderfahrzeug nach Anspruch 1,
**dadurch gekennzeichnet,**
**dass** das Kehrgerät an einem Kupplungsmaul des Kinderfahrzeugs befestigbar ist, wobei die Befestigung in der horizontalen Ebene starr ist.

3. Kinderfahrzeug nach Anspruch 2,
**dadurch gekennzeichnet,**
**dass** sich das Kupplungsmaul vorne an dem Kinderfahrzeug befindet.

4. Kinderfahrzeug nach einem der Ansprüche 1 bis 3,
**dadurch gekennzeichnet,**
**dass** das Kehrgerät über einen Adapter (8) an dem Kinderfahrzeug befestigbar ist.

5. Kinderfahrzeug nach Anspruch 4,
**dadurch gekennzeichnet,**
**dass** das Kehrgerät aus einer funktionsfähigen Lage in eine vom Boden beabstandete Lage anhebbar ist.

6. Kinderfahrzeug nach Anspruch 1,
**dadurch gekennzeichnet,**
**dass** an dem Mitnehmerrad (6) ein Rad (9) mit kreisbogenförmiger Lauffläche anliegt, das drehfest mit der Antriebsachse (11) verbunden ist.

7. Kinderfahrzeug nach Anspruch 1,
**dadurch gekennzeichnet,**
**dass** die antriebsmäßige Koppelung der Bürstenwalze über eine GliederKette (13) erfolgt, die in Zahnräder (12,14) der Antriebsachse (11) und der Achse (5) der Bürstenwalze (3) eingreift.

8. Kinderfahrzeug nach Anspruch 6,
**dadurch gekennzeichnet,**
**dass** die senkrechte Achse (8) mittig über dem Rad (9) angeordnet ist.

9. Kinderfahrzeug nach Anspruch 1,
**dadurch gekennzeichnet,**
**dass** das Mitnehmerrad (6) über Zahnräder (26,29,27,31,33) und eine Gliederkette (28) mit der Antriebsachse (11) verbunden ist.

10. Kinderfahrzeug nach Anspruch 9,
**dadurch gekennzeichnet,**
**dass** die senkrechte Achse (8) mittels einer Hülse (36) an der Antriebsachse (11) gehalten ist.

11. Kinderfahrzeug nach einem der Ansprüche 1 bis 10,
ferner **gekennzeichnet durch**
einen Auffangbehälter (2), der am vorderen Endbereich des Gehäuses (1) des Kehrgerätes lösbar befestigt ist.

12. Kinderfahrzeug nach einem der Ansprüche 1 bis 11,
**dadurch gekennzeichnet,**
**dass** am vorderen Endbereich des Gehäuses (1) des Kehrgerätes zwei seitlich beabstandete Lenkrollen (22) befestigt sind.

## Claims

1. A children's vehicle, particularly a pedal vehicle, with a sweeping device, which is releasably connectable to the children's vehicle and is provided with at least one brush rotatable about a horizontal axis, **characterised in that** a drive wheel (6) is arranged to drive the brush roller and, in the functional position of the sweeping device, engages the ground and is operatively coupled to a drive shaft (11), which for its part is operatively coupled to the shaft (5) of the brush roller (3) and that the drive wheel (6) is mounted to be rotatable about a vertical shaft (8), which is arranged centrally above the drive shaft (11).

2. A children's vehicle as claimed in claim 1, **characterised in that** the sweeping device is fastenable to a coupling jaw of the children's vehicle, whereby the fastening is rigid in the horizontal plane.

3. A children's vehicle as claimed in claim 2, **characterised in that** the coupling jaw is located at the front of the children's vehicle.

4. A children's vehicle as claimed in one of claims 1 to 3, **characterised in that** the sweeping device is fastenable to the children's vehicle by means of an adapter (8).

5. A children's vehicle as claimed in claim 4, **characterised in that** the sweeping device is liftable out of a functional position into a position spaced from the ground.

6. A children's vehicle as claimed in claim 1, **characterised in that** the drive wheel (6) is engaged by a wheel (9) with a circular arcuate contact surface, which is rotationally fixedly connected to the drive shaft (11).

7. A children's vehicle as claimed in claim 1, **characterised in that** the drive coupling of the brush roller is effected by means of a link chain, which engages with toothed wheels (12, 14) on the drive shaft (11) and the shaft (5) of the brush roller (3).

8. A children's vehicle as claimed in claim (6), **characterised in that** the vertical shaft (8) is arranged centrally above the wheel (9).

9. A children's vehicle as claimed in claim 1, **characterised in that** the drive wheel (6) is connected to the drive shaft (11) by means of toothed wheels (26, 29, 27, 31, 33) and a link chain (28).

10. A children's vehicle as claimed in claim 9, **characterised in that** vertical shaft (8) is retained on the drive shaft (11) by means of a sleeve (36).

11. A children's vehicle as claimed in one of claims 1 to 10, further **characterised by** a collecting container (2), which is releasably fastened to the front end region of the housing (1) of the sweeping device.

12. A children's vehicle as claimed in one of claims 1 to 11, **characterised in that** two laterally spaced guide rollers (22) are fastened to the front end region of the housing (1).

## Revendications

1. Véhicule pour enfant, en particulier trotteur, comportant un appareil de balayage pourvu au moins d'une brosse pouvant tourner autour d'un axe horizontal, lequel appareil de balayage peut être relié de manière amovible au véhicule pour enfant,
**caractérisé en ce**
**qu'**est prévue aux fins de l'entraînement de la brosse rotative, une roue d'entraînement (6) qui repose au sol lorsque l'appareil de balayage est en position de fonctionnement et qui est couplée en entraînement à un axe d'entraînement (11) qui est couplé en entraînement de son côté à l'axe (5) de la brosse rotative (3), et en ce que la roue d'entraînement (6) est montée de manière à pouvoir tourner autour d'un axe (8) perpendiculaire, lequel axe est disposé au centre sur l'axe d'entraînement (11).

2. Véhicule pour enfant selon la revendication 1,
**caractérisé en ce**
**que** l'appareil de balayage peut être fixé au niveau d'une mâchoire d'accouplement du véhicule pour enfant, sachant que la fixation est dans le plan horizontal rigide.

3. Véhicule pour enfant selon la revendication 2,
**caractérisé en ce**
**que** la mâchoire d'accouplement se trouve à l'avant sur le véhicule pour enfant.

4. Véhicule pour enfant selon l'une quelconque des revendications 1 à 3,
**caractérisé en ce**
**que** l'appareil de balayage peut être fixé par l'intermédiaire d'un adaptateur (8) au véhicule pour enfant.

5. Véhicule pour enfant selon la revendication 4,
**caractérisé en ce**
**que** l'appareil de balayage peut être soulevé depuis une position de fonctionnement dans une position tenue à l'écart du sol.

6. Véhicule pour enfant selon la revendication 1,
**caractérisé en ce**
**que** repose au niveau de la roue d'entraînement (6) une roue (9) présentant une surface de roulement en forme d'arc de cercle, laquelle est reliée de manière solidaire en rotation à l'axe d'entraînement (11).

7. Véhicule pour enfant selon la revendication 1,
**caractérisé en ce**
**que** l'accouplement en entraînement de la brosse rotative se fait par l'intermédiaire d'une chaîne à maillons (13) qui vient en prise avec des roues dentées (12, 14) de l'axe d'entraînement (11) et de l'axe (5) de la brosse rotative (3).

8. Véhicule pour enfant selon la revendication 6,
**caractérisé en ce**
**que** l'axe perpendiculaire (8) est disposé au centre sur la roue (9).

9. Véhicule pour enfant selon la revendication 1,
**caractérisé en ce**
**que** la roue d'entraînement (6) est reliée par l'intermédiaire de roues dentées (26, 29, 27, 31, 33) et d'une chaîne à maillons (28) à l'axe d'entraînement (11).

10. véhicule pour enfant selon la revendication 9,
**caractérisé en ce**
**que** l'axe perpendiculaire (8) est maintenu au niveau de l'axe d'entraînement (11) au moyen d'une douille (36).

11. Véhicule pour enfant selon l'une quelconque des revendications 1 à 10,
**caractérisé par**
un récipient collecteur (2) qui est fixé de manière amovible au niveau de la zone d'extrémité avant du boîtier (1) de l'appareil de balayage.

12. Véhicule pour enfant selon l'une quelconque des revendications 1 à 11,
**caractérisé en ce**
**que** deux galets de guidage (22) espacés latéralement sont fixés au niveau de la zone d'extrémité avant du boîtier (1) de l'appareil de balayage.
